# EUROPEAN PATENT APPLICATION

(11) **EP 3 896 541 A1**
(43) Date of publication of application: **20.10.2021**
(21) Application number: 19895812.6
(22) Date of filing: 09.10.2019
(51) Int. Cl.: G05B 19/418, G06Q 50/04

(54) **SAFETY MANAGEMENT ASSISTANCE SYSTEM, AND CONTROL PROGRAM**

(30) Priority: 14.12.2018 JP 2018234794
(71) Applicant: KONICA MINOLTA, INC., Tokyo 100-7015 (JP)
(72) Inventor: SHOBU, Takahiko, Tokyo 100-7015 (JP); YONETAKE, Junichiro, Tokyo 100-7015 (JP); YAMAMOTO, Shinichi, Tokyo 100-7015 (JP); ISHIKAWA, Ryouta, Tokyo 100-7015 (JP); MURAMATSU, Toshiyuki, Tokyo 100-7015 (JP); IMAI, Makoto, Tokyo 100-7015 (JP); SHIMIZU, Shoken, Kiyose-shi, Tokyo 204-0024 (JP); HOUJYO, Rieko, Kanagawa-shi, Kanagawa 214-0023 (JP); MIZUSHIMA, Kyoko, Kiyose-shi, Tokyo 204-0024 (JP)
(74) Representative: MFG Patentanwälte Meyer-Wildhagen Meggle-Freund Gerhard PartG mbB
(86) International application number: PCT/JP2019/039909
(87) International publication number: WO 2020/121634

(57) **Abstract**

Sufficient safety is ensured even when workers and machines coexist and work in cooperation. A safety management assistance system 20 includes: an acquisition unit 221 that acquires position information of a worker working and/or a machine operating, in a work area; a generation unit 223 that generates a predicted flow line of the worker 80 on the basis of a history of the position information of the worker 80, and generates a predicted flow line of the machine 30 on the basis of a history of the position information of the machine 30 and/or a set operating range; a determination unit 224 that predicts positions of the worker 80 and the machine 30 from positions of the worker 80 and the machine 30 at present, in the work area 90, acquired by the acquisition unit 221, and the predicted flow line of the worker 80 and the predicted flow line of the machine, generated by the generation unit, and determines whether or not the predicted positions establish a predetermined positional relationship on the basis of a determination criterion; and a notification unit 225 that performs notification of information indicating that the predetermined positional relationship is established when the determination unit 224 determines that the predetermined positional relationship is established.

## Description

### Technical Field

The present invention relates to a safety management assistance system and a control program.

### Background Art

At a manufacturing site or the like, a production system is generally used in which not only one machine operates but also a plurality of machines is integrated together and operated. Even in such a production system, it is necessary to ensure safety of workers. ISO 11161, an international safety standard, is a group safety standard for an integrated manufacturing system (IMS), and ISO 12100 defines higher basic safety standards. In these safety standards, it is intended to ensure the safety of workers by separating operating ranges of the machines and action ranges of the workers from each other, or prohibiting the workers from entering areas where the machines are in operation to isolate the workers from the machines in terms of location or time. As such an initiative, there is Safety 1.0. In this Safety 1.0, the safety of workers is achieved by achieving safety of machinery and equipment and eliminating coexistence areas of humans (workers) and machines.

However, in a production system, there are not only routine work but also non-routine work such as machine maintenance, cleaning, troubleshooting, and the like, and in the non-routine work, generally, a procedure for ensuring safety is performed in accordance with a work manual or the like, whereby the safety of workers are achieved. However, when the procedure for ensuring safety is not appropriately executed due to human error of workers, an accident such as injury of the worker may occur.

Types of the human error include "slip", "lapse", "mistake", "violation", and the like. The "slip" is caused by lack of attention of workers, and is, for example, that a "blue button" is pressed when a "red button" should be pressed. The lapse is caused by misunderstandings in workers' memory, and is, for example, that processing that should be executed at a certain time is forgotten to be executed. The "mistake" is caused by misunderstandings and assumptions at a planning stage. The "violation" is an act in which the worker is aware of the procedure for ensuring safety but does not intentionally follow the procedure. Examples of the act include forcibly crossing an off-limits fence, or performing work that is prohibited during machine operation by intentionally releasing a safety switch during machine operation. Regarding these acts, a state of mind is caused in which workers do not want to stop a machine as much as possible in a situation where productivity decreases when the machine is stopped, whereby the workers are prone to do such prohibited acts.

Patent Literature 1 discloses an integrated manufacturing system for the purpose of reducing accidents caused by protective measures that depend on such acts of workers. The integrated manufacturing system accepts registration of work to be performed on any of a plurality of machines from a worker, and on the basis of the work registered, specifies an operation mode that can be set for a machine on which the work is performed.

### Citation List

### Patent Literature

Patent Literature 1: JP 2014-199637 A

### Summary of Invention

### Technical Problem

However, Safety 1.0 that achieves safety by eliminating the coexistence area of humans (workers) and machines is not sufficient, and an initiative called Safety 2.0 has been performed that achieves the safety of workers while further avoiding a decrease in productivity as much as possible. This Safety 2.0 is called "cooperative safety" in which humans, things, and the environment cooperate to build safety.

In Patent Literature 1 described above, similar to the initiative of Safety 1.0, restrictions are imposed on the machine side to ensure the safety of humans (workers), and there is a problem that productivity is reduced.

The present invention has been made in view of circumstances described above, and it is an object to provide a safety management assistance system and a control program that can ensure sufficient safety even when workers and machines coexist and work in cooperation.

### Solution to Problem

The above object of the present invention is achieved by the following solutions.
(1) A safety management assistance system including:
   an acquisition unit that acquires position information of a worker working and/or a machine operating, in a work area;
   a generation unit that generates a predicted flow line of the worker on the basis of a history of the position information of the worker, and generates a predicted flow line of the machine on the basis of a history of the position information of the machine and/or a set operating range;
   a determination unit that predicts positions of the worker and the machine from positions of the worker and the machine at present, in the work area, acquired by the acquisition unit, and the predicted flow line of the worker and the predicted flow line of the machine, generated by the generation unit, and determines whether or not the predicted positions establish a predetermined positional relationship on the basis of a determination criterion; and
   a notification unit that performs notification of information indicating that the predetermined positional relationship is established when the determination unit determines that the predetermined positional relationship is established.
(2) The safety management assistance system according to (1), in which the notification unit notifies the worker, the machine, or a pre-registered registrant of information indicating that the predetermined positional relationship is established.
(3) The safety management assistance system according to (1) or (2), in which
   the acquisition unit acquires physical condition information regarding a physical condition of the worker, and
   the determination unit changes the determination criterion on the basis of the physical condition information acquired by the acquisition unit.
(4) The safety management assistance system according to any of (1) to (3), in which
   the acquisition unit acquires identification information of the worker, or an operator who operates the machine, and
   the determination unit determines a proficiency level related to work in the work area of the worker or the operator on the basis of the identification information and a worker list describing correspondence between the identification information and the proficiency level, and changes the determination criterion depending on the determined proficiency level.
(5) The safety management assistance system according to any of (1) to (4), in which
   the acquisition unit acquires identification information of the worker in each piece of the position information together with the position information of the worker,
   the determination unit refers to a planned work area in the work area set in advance for each of the workers, and on the basis of the identification information, determines whether or not the worker is located outside the planned work area, or whether or not a worker other than a set worker is located in the planned work area, and
   when the determination unit determines that the worker is located outside the planned work area, or determines that the worker other than the set worker is located in the planned work area, the notification unit performs notification of information to that effect.
(6) The safety management assistance system according to any of (1) to (5), in which the acquisition unit acquires information regarding an environmental state including at least one of temperature, humidity, or brightness in the work area, and changes the determination criterion depending on the environmental state.
(7) The safety management assistance system according to any of (1) to (5), in which
   the acquisition unit acquires information regarding an environmental state including a position of a building or structure in the work area, and
   the determination unit further refers to the environmental state, and determines whether or not the position of the building or structure and the predicted position of the worker, or the position of the building or structure and the predicted position of the machine establish the predetermined positional relationship on the basis of the determination criterion.
(8) The safety management assistance system according to any of (1) to (7), in which
   the determination unit further determines whether or not the predicted position of the worker is included in a hazardous area in the work area set in advance, and
   when the determination unit determines that the predicted position of the worker is included in the hazardous area, the notification unit performs notification of information to that effect.
(9) The safety management assistance system according to any of (1) to (8), in which the position information acquired by the acquisition unit includes three-dimensional position information.
(10) The safety management assistance system according to (9), in which the position information acquired by the acquisition unit includes three-dimensional position information obtained by measuring a distance with Lidar.
(11) The safety management assistance system according to any of (1) to (10), in which
   information indicating that the predetermined positional relationship is established includes avoidance information indicating a guidance position or guidance direction for guiding the worker not to establish the predetermined positional relationship, and
   the notification unit notifies the worker of the avoidance information.
(12) The safety management assistance system according to (11), in which after the notification unit notifies the worker of the avoidance information, the determination unit performs evaluation of an avoidance result regarding the worker, and changes the avoidance information or the determination criterion to be used thereafter depending on the evaluation.
(13) A control program executed by a computer that controls a safety management assistance system that acquires position information of a worker working and/or a machine operating in a work area,
   the control program for causing the computer to execute processing including:
   a step (a) of generating a predicted flow line of the worker on the basis of a history of the position information of the worker;
   a step (b) of generating a predicted flow line of the machine on the basis of a history of the position information of the machine and/or a set operating range;
   a step (c) of acquiring positions of the worker and the machine at present in the work area;
   a step (d) of predicting positions of the worker and the machine from the positions of the worker and the machine at present acquired in the step (c), the predicted flow line of the worker generated in the step (a), and the predicted flow line of the machine generated in the step (b), and determining whether or not the predicted positions establish a predetermined positional relationship on the basis of a determination criterion; and
   a step (e) of performing notification of information indicating that the predetermined positional relationship is established when it is determined in the step (d) that the predetermined positional relationship is established.

### Advantageous Effects of Invention

The safety management assistance system according to the present invention includes: a generation unit that generates a predicted flow line of the worker on the basis of a history of the position information of the worker, and generates a predicted flow line of the machine on the basis of a history of the position information of the machine and/or a set operating range; a determination unit that predicts positions of the worker and the machine from positions of the worker and the machine at present, in the work area, acquired by the acquisition unit, and the predicted flow line of the worker and the predicted flow line of the machine, generated by the generation unit, and determines whether or not the predicted positions establish a predetermined positional relationship on the basis of a determination criterion; and a notification unit that performs notification of information indicating that the predetermined positional relationship is established when the determination unit determines that the predetermined positional relationship is established. As a result, sufficient safety can be ensured even when workers and machines coexist and work in cooperation.

### Brief Description of Drawings

Fig. 1 is a block diagram illustrating a main configuration of a safety management assistance system according to a first embodiment.
Fig. 2 is a diagram illustrating an example of a work area in which the safety management assistance system is used.
Fig. 3 is a cross-sectional view illustrating a configuration of a lidar.
Fig. 4 is a schematic diagram illustrating a position history (movement locus) of a worker in the work area.
Fig. 5 is a flowchart illustrating processing of generating a predicted flow line executed by the safety management assistance system.
Fig. 6A is a flowchart illustrating safe avoidance processing executed by the safety management assistance system according to the first embodiment.
Fig. 6B is a flowchart illustrating processing performed subsequent to Fig. 6A.
Fig. 7 is a block diagram illustrating a main configuration of a safety management assistance system according to a second embodiment.
Fig. 8A is a flowchart illustrating safe avoidance processing executed by the safety management assistance system according to the second embodiment.
Fig. 8B is a flowchart illustrating processing performed subsequent to Fig. 8A.
Fig. 9 is a flowchart illustrating safe avoidance processing executed by a safety management assistance system according to a third embodiment.

### Description of Embodiments

Hereinafter, embodiments of the present invention will be described with reference to the drawings. Note that, in the description of the drawings, the same elements are denoted by the same reference numerals, and duplicate descriptions will not be provided. Furthermore, dimensional ratios of the drawings are exaggerated for convenience of description and may be different from actual ratios.

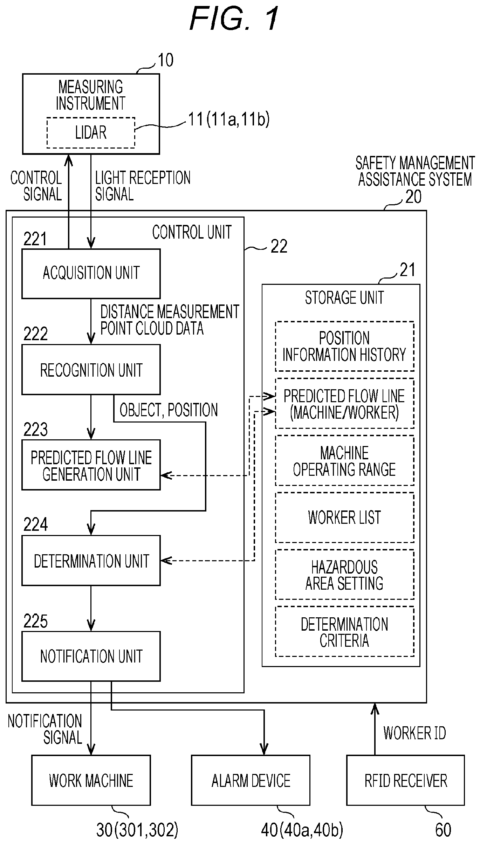

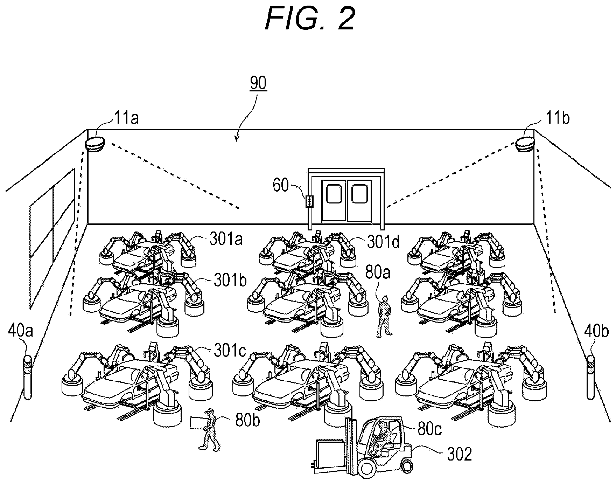

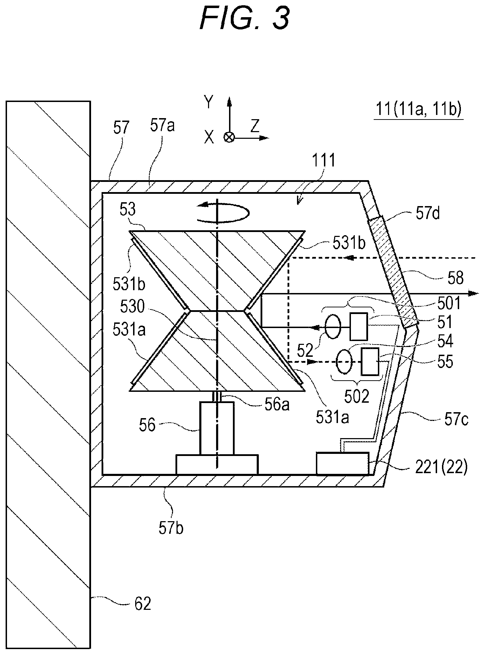

Fig. 1 is a block diagram illustrating a main configuration of a safety management assistance system 20. Fig. 2 is a diagram illustrating an example of a work area in which the safety management assistance system 20 is used. Fig. 3 is a cross-sectional view illustrating a configuration of a lidar 11.

As illustrated in Fig. 1, the safety management assistance system 20 includes a storage unit 21 and a control unit 22. Furthermore, the safety management assistance system 20 makes communication connection with a measuring instrument 10, a work machine 30, an alarm device 40, and an RFID receiver 60. For a work area 90 of a manufacturing process as illustrated in Fig. 2 as a target, the safety management assistance system 20 assists safety management in the work area 90. A scope of application of the safety management assistance system 20 is not limited to the manufacturing process as illustrated in Fig. 2, and may be applied to a work area of a logistics warehouse, or may be applied to an outdoor construction site or civil engineering site. Furthermore, the work area may be, for example, a plurality of work areas separated into floors of a plurality of different levels instead of being one partitioned area.

In the work area 90, there are a plurality of fixed (installation type) machines 301a to 301d, and a self-propelled (self-propelled type) machine 302 (reference signs are omitted for some machines). Workers 80a to 80c work in the work area 90.

In the following, when the machines 301a to 301d are collectively referred to, they are simply referred to as a machine 301. A worker 80 (80a to 80c) and a lidar 11 (11a, 11b) described later are also handled in the same manner. Furthermore, the machines 301 and 302 are collectively referred to as the work machine 30. The work machine 30 includes both an installation type machine with a part of the structure fixed in the work area 90 and a self-propelled type machine, which are machines that operate mechanically by electric power and are used in the work area 90. The installation type machine includes a crane and an assembly apparatus. Furthermore, the self-propelled type machine includes a vehicle such as a fork-lift for transportation, and a self-propelled crane. These work machines may be machines that automatically operate depending on pre-input conditions, or may be machines that operate by operation of an operator. Furthermore, the operator does not necessarily have to perform operation on the side of the work machine 30, and may perform operation remotely.

The workers 80a to 80c can be operators who operate the work machine 30 (301, 302). In Fig. 2, the worker 80c is also an operator who operates the machine 302. The machine 302 is a fork-lift as a self-propelled machine.

The alarm device 40 is a device that issues an alarm to the worker 80. In the example illustrated in Fig. 2, the alarm device 40 is warning lights 40a and 40b. However, the present invention is not limited this, and a speaker, a siren, or a display such as a digital signage may be used as the alarm device 40.

The RFID receiver 60 is provided near a gate of the work area 90. Each worker 80 carries, for example, a card-type IC tag, and each time the worker enters or exits the work area 90, the IC tag on which the worker ID of the worker 80 is recorded is brought closer to the RFID receiver 60, whereby the gate opens and entry and exit to the work area 90 are detected. The gate is included in a measurement space of the measuring instrument 10, and when passing through the gate, an object (human) detected by the measuring instrument 10 is associated with the worker ID.

The measuring instrument 10 targets the work area 90 and detects position information of the worker 80 working in the work area 90 and the machines 301 and 302 operating. In the examples illustrated in Figs. 1 and 2, the measuring instrument 10 includes the lidar 11 (LiDAR: Light Detection and Ranging). As illustrated in Fig. 2, the lidar 11 uses a part or all of the work area 90 as the measurement space, and scans the measurement space to detect a target object in the entire area of the measurement space. Distance measurement point cloud data (also referred to as "3D map") is generated that has distance information to the target object for each pixel. Three-dimensional position information of the target object is obtained from the distance measurement point cloud data. In Fig. 2, a plurality of the lidars 11a and 11b is used, and the entire work area 90 is used as the measurement space. The plurality of lidars 11a and 11b is used, whereby a blind spot area is reduced and a wider area can be measured. Note that, the distance measurement point cloud data obtained by the plurality of lidars 11a and 11b may be integrated into data in one coordinate system by being subjected to coordinate transformation. Furthermore, to avoid complicated processing, when an object (moving body) in the measurement space is recognized, only association of the object may be performed without integration of the coordinate system.

Note that, the measuring instrument 10 may use another type of measuring instrument instead of the lidar 11 or together with the lidar 11. For example, a stereo camera may be used to generate distance measurement point cloud data. Alternatively, as the other type of measuring instrument, information such as radio field strength of a wireless signal from Wi-Fi or a beacon transmitted from three or more positions may be acquired by a wireless terminal carried by a worker (target object), and a position in the work area 90 may be detected from the information such as the radio field strength. Alternatively, a camera in a bird's-eye view arrangement may be used to capture an image in a direction directly below from the ceiling. Two-dimensional position information can be measured by using the beacon or the bird's-eye view camera.

### (Lidar 11)

Hereinafter, the configuration of the lidar 11 will be described with reference to Fig. 3. Fig. 3 is a cross-sectional view illustrating a schematic configuration of the lidar 11. The lidar 11 includes a light emitting/receiving unit 111. The light emitting/receiving unit 111 includes a semiconductor laser 51, a collimating lens 52, a mirror unit 53, a lens 54, a photodiode 55, a motor 56, and a housing 57 that accommodates these configuration members. An acquisition unit 221 of the control unit 22 is arranged in the housing 57. The light emitting/receiving unit 111 outputs a light reception signal of each pixel obtained by scanning the measurement space of the lidar 11 with laser spot light. The acquisition unit 221 generates distance measurement point cloud data on the basis of the light reception signal. The distance measurement point cloud data is also referred to as a distance image or a distance map.

The semiconductor laser 51 emits pulsed laser light flux. The collimating lens 52 converts divergent light from the semiconductor laser 51 into parallel light. The mirror unit 53 performs scanning of laser light made parallel by the collimating lens 52 toward a measurement area by a rotating mirror surface, and reflects reflected light from a target object. The lens 54 collects the reflected light from the target object reflected by the mirror unit 53. The photodiode 55 includes a plurality of pixels arranged in the Y direction that receives light collected by the lens 54. The motor 56 rotationally drives the mirror unit 53.

The acquisition unit 221 obtains distance information (distance value) on the basis of a time interval (time difference) between an emission timing of the semiconductor laser 51 and a light reception timing of the photodiode 55. The acquisition unit 221 includes a CPU and a memory, and obtains distance measurement point cloud data by executing various types of processing by executing a program stored in the memory, but may include a dedicated hardware circuit for generating distance measurement point cloud data. Furthermore, the acquisition unit 221 may be incorporated inside the housing of the safety management assistance system 20 main body and integrated in terms of hardware.

In the present embodiment, the semiconductor laser 51 and the collimating lens 52 constitute an emission unit 501, and the lens 54 and the photodiode 55 constitute a light receiving unit 502. Optical axes of the emission unit 501 and the light receiving unit 502 are preferably orthogonal to a rotation axis 530 of the mirror unit 53.

The box-shaped housing 57 fixedly installed to a building wall 62 such as a side wall of a building forming the work area 90 (see Fig. 2) includes an upper wall 57a, a lower wall 57b facing the upper wall 57a, and a side wall 57c that connects the upper wall 57a and the lower wall 57b to each other. An opening 57d is formed in a part of the side wall 57c, and a transparent plate 58 is attached to the opening 57d.

The mirror unit 53 has a shape in which two quadrangular pyramids are joined in opposite directions and integrated together, that is, has four pairs (but not limited to four pairs) of mirror surfaces 531a and 531b tilted in a direction to face each other in pairs. The mirror surfaces 531a and 531b are preferably formed by depositing a reflective film on a surface of a resin material (for example, polycarbonate (PC)) in the shape of the mirror unit.

The mirror unit 53 is connected to a shaft 56a of the motor 56 fixed to the housing 57 and is rotationally driven. In the present embodiment, for example, in a state of being installed on the building wall 62, an axis (rotation axis) of the shaft 56a extends in the Y direction that is the vertical direction, and the XZ plane formed by the X direction and the Z direction orthogonal to the Y direction is a horizontal plane, but the axis of the shaft 56a may be tilted with respect to the vertical direction.

Next, a target object detection principle of the lidar 11 will be described. In Fig. 3, the divergent light emitted from the semiconductor laser 51 intermittently in a pulse shape is converted into parallel light flux by the collimating lens 52 and incident on the first mirror surface 531a of the rotating mirror unit 53. Thereafter, the parallel light flux is reflected by the first mirror surface 531a, further reflected by the second mirror surface 531b, and then transmitted through the transparent plate 58, and scanning is performed toward the measurement space outside, for example, as laser spot light having a vertically long rectangular cross section. Note that, a direction in which the laser spot light is emitted and a direction in which the emitted laser spot light is reflected by the target object and returned as reflected light overlap, and these two overlapping directions are referred to as light emitting/receiving directions (note that, in Fig. 3, for the sake of clarity, the emitted light and the reflected light are illustrated to be shifted from each other in the drawing). The laser spot light traveling in the same light emitting/receiving directions is detected by the same pixel.

Here, in combinations of the pair of mirrors of the mirror unit 53 (for example, the first mirror surface 531a and the second mirror surface 531b), the four pairs have respective different crossing angles. The laser light is sequentially reflected by the rotating first mirror surface 531a and second mirror surface 531b. First, scanning of the laser light reflected by the first mirror surface 531a and the second mirror surface 531b of a first pair is performed in the horizontal direction (also referred to as "main scanning direction") from left to right in the top area of the measurement space, in accordance with rotation of the mirror unit 53. Next, scanning of the laser light reflected by the first mirror surface 531a and the second mirror surface 531b of a second pair is performed in the horizontal direction from left to right in the second area from the top of the measurement space in accordance with the rotation of the mirror unit 53. Next, scanning of the laser light reflected by the first mirror surface 531a and the second mirror surface 531b of a third pair is performed in the horizontal direction from left to right in the third area from the top of the measurement space in accordance with the rotation of the mirror unit 53. Next, scanning of the laser light reflected by the first mirror surface 531a and the second mirror surface of a fourth pair is performed in the horizontal direction from left to right in the bottom area of the measurement space in accordance with the rotation of the mirror unit 53. As a result, one scanning is completed of the entire measurement space that can be measured by the lidar 11. Images obtained by scanning these four areas are combined to obtain one frame. Then, after the mirror unit 53 makes one rotation, scanning returns to that by the first mirror surface 531a and the second mirror surface 531b of the first pair again, and thereafter scanning from the top area to the bottom area of the measurement space (this top-to-bottom direction is also referred to as "sub-scanning direction") is repeated, and the next frame is obtained.

In Fig. 3, a part of the laser light reflected by hitting the target object among the scanning light flux is transmitted through the transparent plate 58 again and incident on the second mirror surface 531b of the mirror unit 53 in the housing 57 and reflected, further reflected by the first mirror surface 531a, collected by the lens 54, and detected pixel by pixel on the light receiving surface of the photodiode 55. Moreover, the acquisition unit 221 obtains the distance information depending on the time difference between the emission timing of the semiconductor laser 51 and the light reception timing of the photodiode 55. As a result, it is possible to detect the target object in the entire area in the measurement space and obtain a frame as distance measurement point cloud data having distance information for each pixel. The frame is generated at a predetermined period, for example, 10 fps. Furthermore, the obtained distance measurement point cloud data may be stored as background image data in the memory in the acquisition unit 221 or the storage unit 21 in accordance with a user's instruction.

### (Safety management assistance system 20)

The safety management assistance system 20 will be described with reference to Fig. 1 again. The safety management assistance system 20 is a computer, for example, and includes a Central Processing Unit (CPU), a memory (semiconductor memory, a magnetic recording medium (hard disk or the like)), an input/output unit (display, keyboard, or the like), a communication interface (I/F), and the like. The communication I/F is an interface for communicating with an external device. For communication, a network interface may be used based on standards such as Ethernet (registered trademark), SATA, PCI Express, USB, and IEEE 1394. Furthermore, for communication, a wireless communication interface may be used such as Bluetooth (registered trademark), IEEE 802.11, or 4G.

As described above, the safety management assistance system 20 includes the storage unit 21 and the control unit 22. The storage unit 21 includes a memory. The control unit 22 mainly includes a memory and a CPU. Note that a part of the functional configuration (acquisition unit 221) of the control unit 22 may be implemented by hardware arranged in the housing 57 of the lidar 11, and the other functional configurations may be arranged in another housing. In that case, the other functional configurations may be arranged inside the building provided with the work area 90, or may be arranged in a remote location and connected to other devices (measuring instrument 10, work machine 30, and the like) via a network.

The control unit 22 functions as the acquisition unit 221 described above, a recognition unit 222, a predicted flow line generation unit 223, a determination unit 224, and a notification unit 225. Here, each data stored in the storage unit 21 will be described before explanation of a function of the control unit 22.

### (Storage unit 21)

The storage unit 21 stores position information history data, predicted flow line data, machine operating range data, determination criteria data, hazardous area setting data, worker list, and the like.

The "position information history data" is history data indicating transition of a position of an object (worker 80, work machine 30, or the like) continuously recognized for a predetermined time by recognition processing (described later) executed by the control unit 22 (recognition unit 222).

The "predicted flow line data" is data generated by the control unit 22 (predicted flow line generation unit 223) referring to the position information history data. The data is a flow line generated by tracking time transition of the position of each object type or each individual object. The predicted flow line data is generated by tracking the time transition of the position of an object.

The "machine operating range data" is data describing an operating range of the work machine 30. For example, in the case of an installation type assembly apparatus, an installation position of the machine and an operating range of an operating part such as an arm are described. The operating range may be set to the maximum operating range according to machine specifications, or may be a range in which a margin is further considered.

The "worker list" includes an ID (worker ID) of each worker 80, a proficiency level (years of experience, qualification) related to work in the work area 90, an assigned planned work area, a physical condition level, a notification destination address, a job grade, and a management area. The notification destination address is an e-mail address for alarm notification, and for example, if the job grade of a certain worker 80 is a site manager (also referred to as a line manager or an observer) and the worker's management area is the work area 90 in Fig. 2, For example, the site manager is also notified of the alarm generated in the work area 90. For the physical condition level, when each worker 80 wears a wearable terminal on one's arm or the like, for example, vital data (body temperature, heart rate, and the like) received from the wearable terminal is compared with a history of past vital data, whereby a level of the physical condition level can be determined.

The "hazardous area setting data" is a static hazardous area preset in the work area 90. The static hazardous area is, for example, an off-limits area.

The "determination criteria data" is determination criteria used by the determination unit 224 to determine whether or not the worker 80 and the work machine 30 establish a predetermined positional relationship, and is a distance Lx and/or a time Tx. For example, the distance Lx is 0 m to several m, and the time Tx is an arbitrary value of 1 to 10 seconds. This value is appropriately determined depending on a degree of hazardousness (severity at the time of occurrence of injury) and productivity. The determination unit 224 predicts positions of the worker 80 and the work machine 30 after the time Tx seconds from the present time. Then, when distances between the predicted positions, the work machine 30, and the worker 80 are within the distance Lx, it is determined that "the predetermined positional relationship is established". When it is determined to be correct (affirmative), the safety management assistance system 20 notifies the worker 80 and the like of an alarm.

Note that, there is a plurality of levels of determination criteria according to the proficiency level and physical condition level of the worker 80. For example, in the case of the worker 80 who is a newcomer having a low skill level or the worker 80 having a low (bad) physical condition level, the distance Lx is set longer. Furthermore, the distance Lx may be set depending on the proficiency level of an operator (worker 80) who operates the work machine 30. For example, the distance Lx of the work machine 30 operated by an operator having a low proficiency level is set longer, and an operating area margin is widened.

### (Control unit 22)

Next, description will be given of functions of the acquisition unit 221, the recognition unit 222, the predicted flow line generation unit 223, the determination unit 224, and the notification unit 225 of the control unit 22.

### (Acquisition unit 221)

The function of the acquisition unit 221 is as described above. At the time of measurement, the acquisition unit 221 emits a transmission wave directed in a plurality of irradiation directions over the measurement space of the work area 90 by the light emitting/receiving unit 111 of the lidar 11, and acquires a reception signal corresponding to a reflected wave of the transmission wave from the object (target object) in the measurement space. Then, distance information for each of the plurality of irradiation directions is obtained depending on a reception timing (time interval between transmission and reception) of the reception signal. As a result, the distance measurement point cloud data is generated.

### (Recognition unit 222)

The recognition unit 222 recognizes an object in the work area 90. In the present embodiment, for example, a background subtraction method is adopted. In the background subtraction method, background image (also referred to as reference image) data generated and stored in advance is used. Specifically, as a preparation (pre-processing) for measurement, scanning of the laser spot light from the lidar 11 is performed in a state where there is no moving object such as the work machine 30 or the worker 80 other than the installation type machine in accordance with the user's instruction. As a result, a background image is obtained on the basis of reflected light obtained from a background target object (stationary object). At the time of actual measurement, when, for example, the worker 80 appears as an object that is a target of action analysis in front of the background target object, reflected light from the worker 80 is newly generated.

The recognition unit 222 has a function of recognizing a moving body. The recognition unit 222 compares the background image data stored in the memory with the distance measurement point cloud data at the present time, and when a difference occurs, it can be recognized that some moving body (object in the foreground) such as the worker 80 has appeared in the work area 90. For example, foreground data is extracted by comparing background data with the distance measurement point cloud data (distance image data) at the present time using the background subtraction method. Then, pixels (pixel group) of the extracted foreground data are divided into clusters depending on, for example, the distance value of the pixels. Then, the size of each cluster is calculated. For example, a vertical dimension, a horizontal dimension, a total area, and the like are calculated. Note that, the "size" referred to here is an actual dimension, and is different from an apparent size (angle of view, that is, spread of pixels), and a mass of the pixel group is determined depending on a distance to the target object. For example, the recognition unit 222 determines whether or not the calculated size is less than or equal to a predetermined size threshold value for identifying a moving body that is an analysis target to be extracted. The size threshold value can be set arbitrarily. For example, the size threshold value can be set on the basis of the size of the moving body assumed in the work area 90. If an action (locus) is analyzed by tracking the worker 80 or the work machine 30, a minimum value of the worker 80 or the work machine 30 may be set as the size threshold value for clustering. Conversely, if all moving bodies are tracked, the size threshold value may be a smaller value.

### (Predicted flow line generation unit 223)

The predicted flow line generation unit 223 generates predicted flow line data by referring to the position information history data of each object. The predicted flow line data is generated for each of the worker 80 and the work machine 30. Note that, by identifying the worker ID of the worker 80, a predicted flow line is generated for each ID of the worker 80, but one predicted flow line may be generated for all the workers 80.

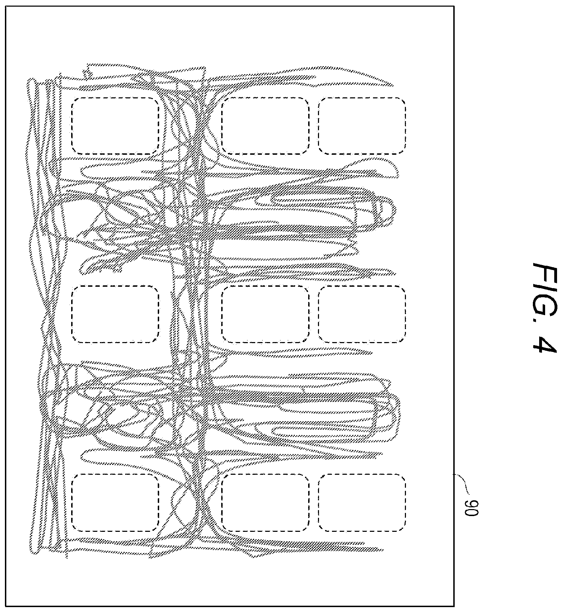

Fig. 4 is a schematic diagram illustrating a history (movement locus) of position information of a worker in the work area 90. The figure illustrates the position information of the worker 80 generated on the basis of the distance measurement point cloud data of the lidar 11, and is converted into a bird's-eye view (XZ plane (floor surface)). A dashed line rectangle corresponds to the machine 301 arranged in the work area 90. The predicted flow line generation unit 223 generates predicted flow line data on the basis of such a history of position information. The generated predicted flow line data is associated with the type of the target object (worker 80, work machine 30) or individual object (work ID, work machine ID).

### (Determination unit 224)

The determination unit 224 determines whether or not safe avoidance processing is required for each of the specific types of objects, that is, the worker 80 and the work machine 30, among objects recognized by the recognition unit 222. Specifically, for each specific type of object, by using (1) a current position and (2) a predicted flow line stored in the storage unit 21, a position at a predetermined time Tx seconds from the present is predicted. Then, it is determined whether or not the predicted positions establish the predetermined positional relationship, that is, whether or not a distance between the predicted positions is within the distance Lx (determination A). The determination result is sent to the notification unit 225. Furthermore, the determination unit 224 also determines whether or not the current position of the worker 80 is at an appropriate position. Specifically, it is determined whether or not the worker 80 is located in the static hazardous area of the work area 90 stored in the storage unit 21 (determination B). Furthermore, the planned work area of the worker list stored in the storage unit 21 is referred to, and it is determined from the worker ID of the worker 80 whether or not the worker 80 is located in an area other than the assigned planned work area (determination C). Furthermore, for each planned work area, a list of workers planned to work is stored in the storage unit 21 in advance, and by referring to the list, the determination unit 224 may determine whether or not a worker other than the set worker 80 is located in the planned work area (determination D). When any of the determination A to the determination D is correct, the determination unit 224 sends the determination result to the notification unit 225. The determination result includes the determination content, and information (ID information or position information) identifying the worker 80 and the work machine 30 that are the targets the determination.

### (Notification unit 225)

Upon receiving the determination result from the determination unit 224, the notification unit 225 notifies each device of information for safe avoidance processing by transmitting a notification signal. This information is information indicating that two target positions (for example, positions of the worker 80 and the work machine 30) establish the predetermined positional relationship. For example, the notification unit 225 stops the work machine 30 or delays the operation by transmitting the notification signal to the target work machine 30. Furthermore, a warning is given to the operator (worker 80) who operates the work machine 30 to urge the safe avoidance action. Furthermore, the notification unit 225 causes the alarm device 40 to output a warning sound, turn on a warning lamp, or display a warning on a digital signage by transmitting the notification signal to the alarm device 40, thereby giving a warning for safe avoidance processing to the target worker 80 in the vicinity. When the alarm device 40 exists at a plurality of locations, the position information of the worker 80 is referred to, and the alarm device 40 to be used is selected. Furthermore, the information indicating that the predetermined positional relationship is established may be avoidance information. For example, the avoidance information may be avoidance information for the worker 80 indicating a guidance position or a guidance direction for guiding the worker, such as "Please change the course.", "Please walk on the right side", or "Please move to another work process A-3.". Such avoidance information may be transmitted to a mobile terminal carried by the worker 80. Furthermore, a setting may be performed so that the mobile terminal vibrates or an LED of the mobile terminal blinks at the same time as transmitting the avoidance information. Furthermore, the avoidance information may be avoidance information such as "Please slow down the operating speed of the work machine" or "Please move the arm of the work machine to the right side". The avoidance information is sent to a mobile terminal carried by the operator who operates the work machine 30, or is transmitted to the work machine 30 and displayed on a liquid crystal display unit of the work machine 30 that can be visually recognized by the operator. By notifying the worker 80 of the avoidance information in this way, avoidance is possible without any confusion even if the worker 80 who is a newcomer and unfamiliar with the work area 90. That is, correct avoidance action can be taken without depending on human ability and experience. Furthermore, the notification unit 225 may notify a mobile terminal of a manager who manages the work area 90 subject to the determination, of an e-mail depending on the determination result. Since the manager can get a bird's-eye view of the entire work site, it is possible to take measures that achieve both safety and productivity even more.

### (Generation processing of predicted flow line)

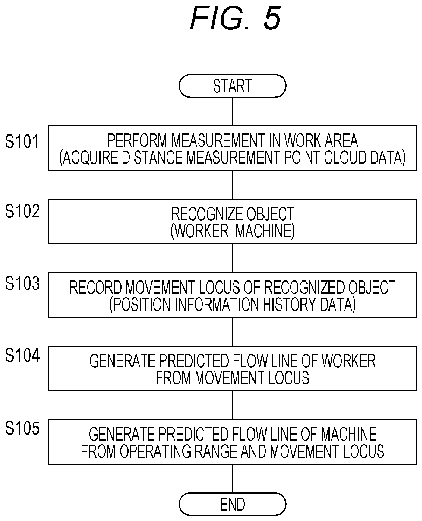

Fig. 5 is a flowchart illustrating processing of generating a predicted flow line. The processing of generating the predicted flow line illustrated in Fig. 5 described below may be performed using measurement data obtained in a first predetermined period (several hours to several days) when the work process is renewed, or may be always performed. In the latter case, the predicted flow line is updated regularly.

### (Step S101)

First, the acquisition unit 221 of the safety management assistance system 20 controls the lidar 11 of the measuring instrument 10 to perform measurement in the work area 90, and acquires distance measurement point cloud data.

### (Step S102)

The recognition unit 222 recognizes objects in the work area 90 from the distance measurement point cloud data obtained in step S101. Furthermore, for humans (workers 80) and the work machines 30 among the recognized objects, when any consecutive number for use in tracking or the target object can be identified, the worker ID or the machine ID of the work machine 30 may be assigned.

### (Step S103)

The recognition unit 222 tracks positions of the worker 80 and the work machine 30 among the recognized objects, and records a movement locus (see Fig. 4). This is stored in the storage unit 21 as position information history data.

### (Step S104)

The predicted flow line generation unit 223 generates a predicted flow line from the movement locus (position information history) of the worker 80, and stores the predicted flow line in the storage unit 21 in association with the worker 80 (or the worker ID). Note that, information on an average and maximum moving speed may be associated with the predicted flow line. The moving speed is used for estimating a predicted position after Tx seconds, which will be described later.

### (Step S105)

The predicted flow line generation unit 223 acquires machine operating range data stored in the storage unit 21 for each work machine 30. Then, the predicted flow line is generated from the operating range of the work machine 30 obtained and the movement locus. The predicted flow line generation unit 223 stores the generated predicted flow line in the storage unit 21 in association with the machine ID of the work machine 30. Note that, in the case of the installation type machine, for the predicted flow line, a movement range (area) of an operating member such as an arm as it is may be used as the predicted flow line. Furthermore, in the case of the self-propelled type machine, the information on the average and maximum moving speed may be associated with the predicted flow line. The moving speed is used for estimating a predicted position after Tx seconds, which will be described later.

### (Safe avoidance processing)

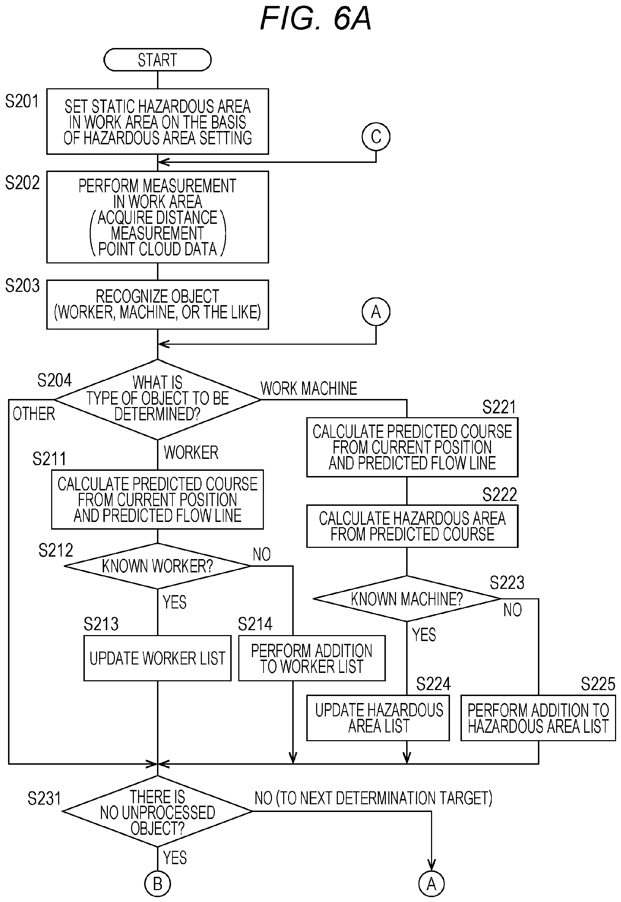

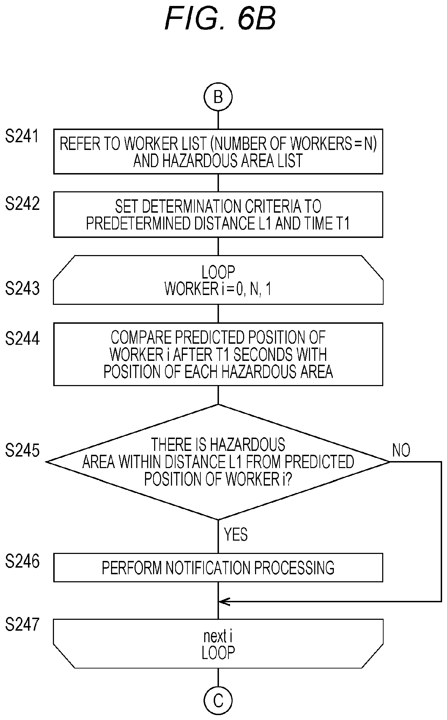

Figs. 6A and 6B are flowcharts illustrating the safe avoidance processing executed by the safety management assistance system 20 according to the first embodiment. The safe avoidance processing of Figs. 6A and 6B is performed using the predicted flow line generated by the processing of Fig. 5. The processing of Figs. 6A and 6B may be performed after the processing of Fig. 5, or may be performed in parallel with the processing of Fig. 5.

### (Step S201)

The control unit 22 refers to hazardous area setting data of the storage unit 21 and sets a static hazardous area in the work area 90. Here, a hazardous area list is newly created, and the static hazardous area is included in the hazardous area list.

### (Step S202)

The acquisition unit 221 controls the lidar 11 to perform measurement in the work area 90, and acquires distance measurement point cloud data.

### (Step S203)

The recognition unit 222 recognizes objects by using the distance measurement point cloud data obtained in step S202. The type of the object recognized here includes the worker 80 and the work machine 30.

### (Step S204)

The determination unit 224 determines the type of the object for each of the objects recognized in step S203. If the type of the target object is the worker 80, the processing proceeds to step S211. If the type of the object is the work machine 30, the processing proceeds to step S221. On the other hand, if the type of the object is unknown, or other than the worker 80 and other than the work machine 30, the processing proceeds to step S231.

### (Step S211)

The determination unit 224 calculates a predicted course from the current position of the worker 80 to be determined and the predicted flow line of the worker 80. At this time, a position after a time T1 (see step S242) may be calculated from the average value or maximum value of the moving speed.

### (Step S212)

The determination unit 224 refers to the worker ID of the worker 80 and determines whether or not the target worker 80 is a known worker 80. If the target is the known worker 80 (YES), the processing proceeds to step S213, and if not (NO), the processing proceeds to step S214.

### (Step S213)

The determination unit 224 updates the worker list stored in the storage unit 21. The worker list includes the data of the predicted course associated with the worker ID, and the data of the predicted course is overwritten by the update.

### (Step S214)

The determination unit 224 performs addition to the worker list. By the addition, the worker ID and the predicted course of the worker are newly added to the worker list.

### (Step S221)

The determination unit 224 calculates a predicted course from the current position of the work machine 30 to be determined and the predicted flow line of the work machine 30. At this time, in the case of the self-propelled type machine, a position after the time T1 (see step S242) may be calculated from the average value or the maximum value of the moving speed.

### (Step S222)

The determination unit 224 sets a hazardous area from the predicted course. For example, if the work machine 30 is a self-propelled type machine, the hazardous area is set wide (long) in a traveling direction and narrow (short) in a direction opposite to the traveling direction.

### (Step S223)

The determination unit 224 refers to the machine ID of the work machine 30 and determines whether or not the target work machine 30 is a known work machine 30. If the target is the known work machine 30 (YES), the processing proceeds to step S224, and if not (NO), the processing proceeds to step S225.

### (Step S224)

The determination unit 224 updates the hazardous area list stored in a temporary memory. The hazardous area list includes machine ID and data of the predicted course of the machine, and the data of the hazardous area is overwritten by the update.

### (Step S225)

The determination unit 224 performs addition to the hazardous area list. By the addition, the machine ID and the hazardous area of the machine are newly added to the hazardous area list.

### (Step S231)

If there is no unprocessed object among the objects recognized in step S203 (YES), the determination unit 224 proceeds to step S241 in Fig. 6B, and if there is an unprocessed object (NO), the unprocessed object is set as the next determination target. Then, the processing of step S204 and subsequent steps is repeated for the determination target.

### (Step S241)

As illustrated in Fig. 6B, the processing of step S241 refers to the worker list and the hazardous area list generated and updated by the processing of Fig. 6A. At this time, the number of workers described in the worker list (more specifically, the workers in the work area 90) is N used in the following processing.

### (Step S242)

The determination unit 224 refers to determination criteria stored in the storage unit 21. Here, it is assumed that a predetermined distance LI and a predetermined time T1 are set as the determination criteria.

### (Step S243)

Between step S243 and step S247, loop processing is performed. The variable of the loop is i, the initial value is 0, and the processing is repeated N times by incrementing the variable by 1 from the worker i to the worker N of the final value N (number of workers).

### (Step S244)

The determination unit 224 predicts a position after T1 second from the predicted course of the worker i described in the worker list. When the predicted flow line (predicted course) has a certain width depending on the probability distribution, the predicted position may be calculated as a two-dimensional area corresponding to the width of the predicted flow line, or may be calculated as a position coordinate of one point from the center value of the predicted flow line.

### (Step S245)

The determination unit 224 refers to the hazardous area list (S224, S225) and determines whether or not there is a hazardous area within the distance L1 from the predicted position of the worker i calculated in step S244. When there is a hazardous area (YES), the processing of the next step S246 is executed, and when there is no hazardous area, the processing of step S246 is skipped.

### (Step S246)

The notification unit 225 executes notification processing. As the notification processing, as described above, the notification signal that is information indicating that the predetermined positional relationship is established is transmitted to the work machine 30 and the alarm device 40. In response to the notification signal, the worker 80 and the work machine 30 (including the work machine 30 operated by the operator) take a safe avoidance action. After that, the processing of step S202 and subsequent steps in Fig. 6A is repeated.

As described above, the safety management assistance system 20 according to the present embodiment includes: the determination unit 224 that predicts the positions of the worker 80 and the work machine 30 from the current positions of the worker 80 and the work machine 30 in the work area 90 acquired by the acquisition unit 221, and the predicted flow line of the worker 80 and the predicted flow line of the work machine 30 generated by the predicted flow line generation unit 223, and determines whether or not the predicted positions establish the predetermined positional relationship on the basis of the determination criteria; and the notification unit 225 that performs notification of information (alarm) indicating that the predetermined positional relationship is established when the determination unit 224 determines that the predetermined positional relationship is established. As a result, sufficient safety can be ensured even when workers and machines coexist and work in cooperation.

### (Second embodiment)

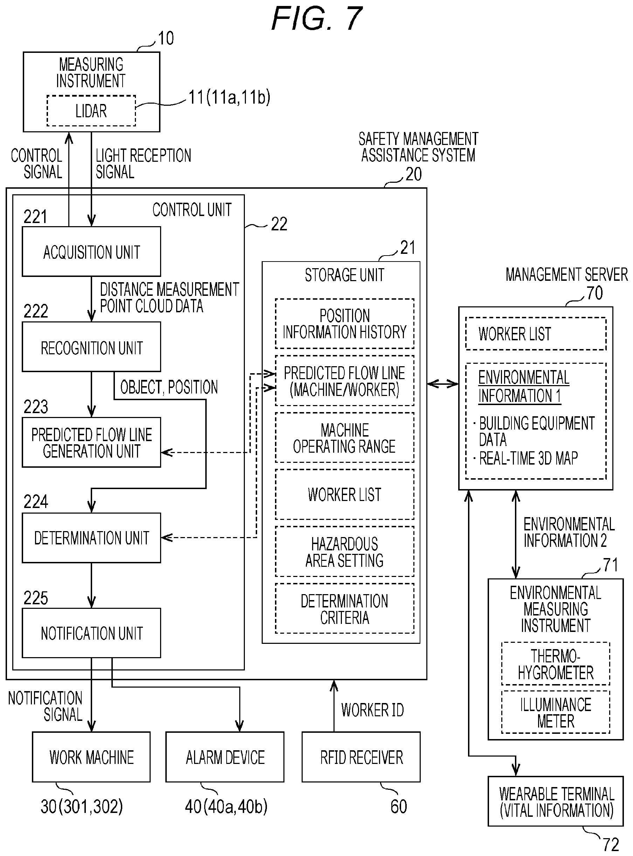

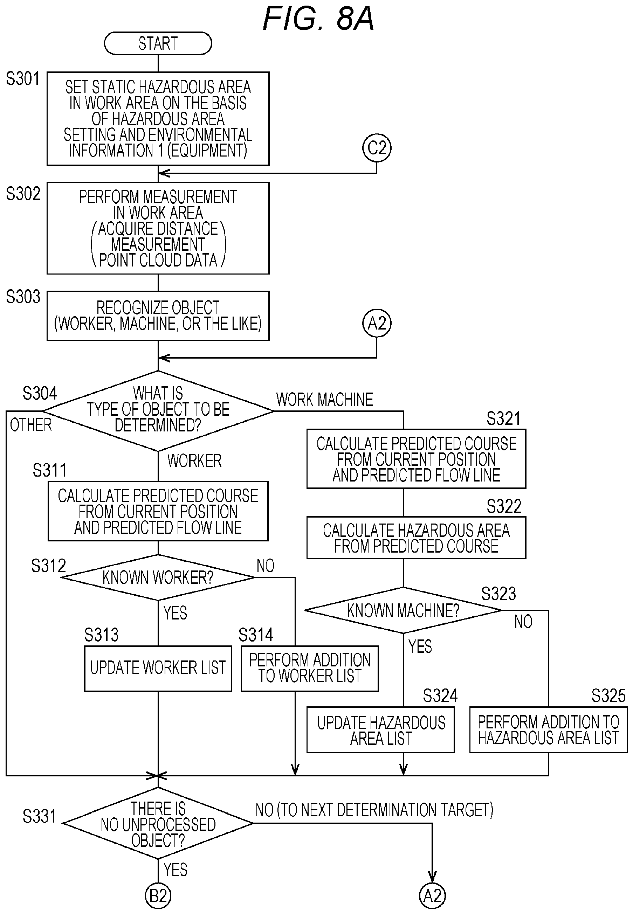

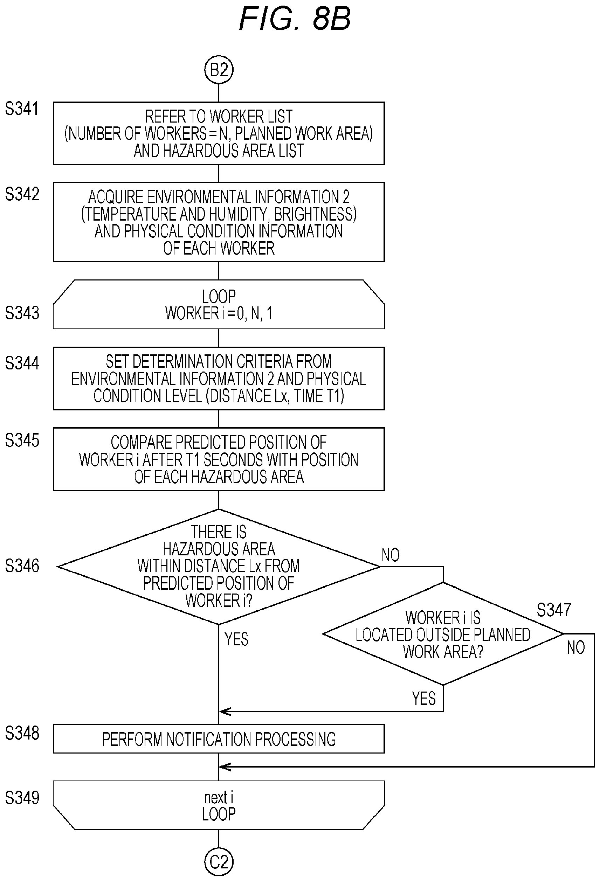

Hereinafter, the safety management assistance system 20 according to a second embodiment will be described with reference to Figs. 7, 8A, and 8B. Fig. 7 is a block diagram illustrating a main configuration of the safety management assistance system 20 according to the second embodiment, and Figs. 8A and 8B are flowcharts illustrating safe avoidance processing. The same components as those of the first embodiment described above will be designated by the same reference numerals, and the description thereof will be omitted.

As illustrated in Fig. 7, the safety management assistance system 20 according to the second embodiment is connected to a management server 70 that manages the work area 90. The management server 70 is a computer and includes a CPU, a memory, and the like. The memory of the management server 70 stores information regarding an environmental state including a position of a building or structure (hereinafter referred to as "environmental information 1"). The environmental information 1 is drawing data related to equipment such as the building or structure forming the work area 90, and a real-time 3D map obtained from various sensors installed in the building.

Furthermore, an environmental measuring instrument 71 is connected to the management server 70. The management server 70 acquires information regarding environmental states of temperature and humidity, and brightness of the work area 90 (hereinafter referred to as "environmental information 2") from a thermo-hygrometer and an illuminance meter included in the environmental measuring instrument 71.

Furthermore, each worker 80 wears a wearable terminal 72 on one's arm or the like. The management server 70 determines the physical condition level by comparing vital data (body temperature, heart rate, and the like) received from the wearable terminal 72 with normal values calculated from a history of past vital data. For example, when the body temperature or the heart rate is higher than an average value in past several days by a predetermined value or more, it is determined that the physical condition level is poor. The determined physical condition level (hereinafter, also referred to as "physical condition information") is associated with the worker ID of each worker 80 and recorded in the worker list stored in the management server 70.

In the second embodiment, the acquisition unit 221 of the safety management assistance system 20 acquires the environmental information 1, environmental information 2, and physical condition information described above from the management server 70, and performs the following safe avoidance processing. Note that, the configuration illustrated in Fig. 7 is merely an example, and functions of the management server 70 may be integrated into the safety management assistance system 20.

### (Safe avoidance processing in second embodiment)

Figs. 8A and 8B correspond to Figs. 6A and 6B, respectively. Furthermore, the processing of Figs. 8A and 8B is performed using the predicted flow line generated by the processing of Fig. 5.

### (Step S301)

The control unit 22 refers to the hazardous area setting data of the storage unit 21 and the environmental information 1 acquired from the management server 70, and sets a static hazardous area in the work area 90.

### (Steps S302 to S331)

These processing steps are the same as steps S202 to S231 in Fig. 6A, and description thereof will be omitted.

### (Step 341)

Similarly to step S241 in Fig. 6B, the worker list and the hazardous area list are referred to. Furthermore, the worker list includes information on the planned work area of the worker 80.

### (Step S342)

The acquisition unit 221 acquires the environmental information 2 (temperature and humidity, brightness) and the physical condition information of each worker 80 included in the worker list from the management server 70.

### (Step S343)

Between step S343 and step S349, loop processing is performed. The variable of the loop is i, the initial value is 0, and the processing is repeated N times by incrementing the variable by 1 from the worker i to the worker N of the final value N (number of workers).

### (Step S344)

The determination unit 224 changes the determination criteria from the environmental information 2 and the physical condition level included in the physical condition information. For example, if the temperature and humidity are higher than normal temperature and humidity, lack of attention is likely to occur, so that the distance Lx longer than the standard distance L1 is set. If the work area 90 has low brightness and is in a dim environment, the distance Lx is set longer similarly. For example, it is a case where only some of lights are turned on when maintenance and inspection are performed. For the physical condition level, similarly, when the physical condition is bad, the distance Lx is set longer. The distance Lx may be set in multiple stages depending on combinations of these conditions. Note that, although the time T1 is fixed, the time T1 may also be changed depending on the environmental information 2 and the physical condition information. Note that, the distance Lx may be set by earning a proficiency level associated with the worker ID in step S341 and taking the proficiency level into consideration.

### (Steps S345, S346)

The processing steps are the same as steps S244 and S245 in Fig. 6A, and the description thereof will be omitted.

### (Step S347)

Here, the determination unit 224 compares the assigned planned work area with the current position of the worker i on the basis of the planned work area referred to in step S341 and the work ID of the worker i. If the worker i is located outside the planned work area (YES), the processing proceeds to step S348, and if the worker i is located in the planned work area (NO), the processing proceeds to step S349.

### (Step S348)

Similarly to step S246 in Fig. 6A, notification processing is performed to the worker 80 and the work machine 30 (including the operator). Furthermore, when the processing passes through step S347, the worker 80 may be notified of information indicating an appropriate planned work area, and the site manager may be notified that there is the worker 80 who is not planned to work.

As described above, in the second embodiment, the determination criteria are changed from the environmental information 2 and the physical condition information, so that the determination criteria are made stricter (the distance Lx is set longer) in a situation where carelessness of the worker 80 is likely to occur. By doing so, more sufficient safety can be ensured. Furthermore, by performing the notification processing when the worker 80 is not located in the appropriate planned work area, the worker 80 can be promoted to move to the appropriate work area and work efficiency can be improved.

### (Third embodiment)

Next, the safety management assistance system 20 according to a third embodiment will be described. In the third embodiment, after the worker 80 is notified of the avoidance information, an action related to the worker 80 is tracked, an avoidance result is evaluated, and the avoidance information or determination criteria to be used thereafter is changed depending on the evaluation.

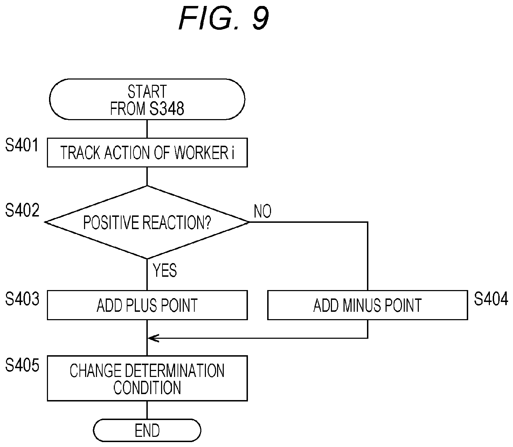

Fig. 9 is a flowchart illustrating safe avoidance processing executed by the safety management assistance system 20 according to the third embodiment.

The figure illustrates processing performed subsequent to step S348 in Fig. 8B (or step S246 in Fig. 6B).

### (Step S401)

The determination unit 224 performs notification (alarming) to the worker i in step S348, and then tracks an action of the worker i. Specifically, a positional relationship between a position of the worker i thereafter and the work machine 30 is evaluated. For example, notification is performed of the avoidance information prompting avoidance of the worker i, that is, information indicating a guidance position or guidance direction for guiding the worker, and then evaluation is performed of whether or not the worker i has correctly separated from the work machine 30 as intended by the avoidance information, or has headed to a correct guidance position. Furthermore, a distance at which the work vehicle i and the work machine 30 are closest to each other (which is zero in the case of contact) may be evaluated. A notification destination of the avoidance information and a target for tracking the action may be not only the worker i (the worker who is in a hazardous situation such as collision or contact) but also the operator (worker 80) who operates the target work machine 30. In that case, the target for adding the action is actually the work machine 30 operated by the operator of the notification destination that is notified of the avoidance information.

### (Step S402)

The determination unit 224 determines whether or not the worker's reaction is a "positive reaction". When the worker's reaction is the positive reaction (YES), the processing proceeds to step S403, and when the worker's reaction is not the positive reaction (NO), that is, an erroneous reaction, the processing proceeds to step S404. Here, the "positive reaction" is a safe action as intended by the avoidance information, and the "erroneous reaction" is an unsafe action. For example, the pre-anxiety action is determined when a contact (trouble) between the worker 80 and the work machine 30 occurs, or when the worker 80 and the work machine 30 come closer to each other than expected (unsafe incident) even if the contact is not reached. Alternatively, the unsafe action is determined when the worker does not go to "another work place" when the avoidance information is information that guides the worker to "another work place", such as "Please move to another work process A-3.".

### (Step S403)

Result aggregation depending on the positive reaction is performed. For example, a plus point is added as an evaluation to the avoidance information issued in step S348. In the evaluation, the proficiency level or the physical condition level may be acquired on the basis of the worker ID of the worker i, for each piece of avoidance information, and the aggregation may be performed for each proficiency level or physical condition level.

### (Step S404)

Result aggregation depending on the erroneous reaction is performed. In this case, a minus point is added as an evaluation to the avoidance information issued in step S348. The value of the minus point may be changed depending on the severity. For example, when contact of the worker 80 with the work machine 30 occurs, the minus point is made smaller (the absolute value is made larger).

### (Step S405)

Depending on the aggregation result, a condition for avoidance information is changed. For example, if an aggregation point for certain avoidance information is a minus point less than a predetermined value, a determination condition is made stricter, and if the aggregation point is a plus point, the determination condition is loosened. The determination condition may be set for each proficiency level and physical condition level. For example, when contact occurs with the worker 80 having a low proficiency level or the work machine 30 operated by an operator (worker 80), and an aggregated minus point become smaller, the distance Lx as the determination condition is set longer.

As described above, in the present embodiment, the determination condition is changed depending on the evaluation of the avoidance result. As a result, when the evaluation result is bad, the determination condition is changed to be stricter, so that notification of an alarm can be performed earlier (earlier time), and the safety can be ensured. On the contrary, when the aggregation point is a plus point greater than or equal to a predetermined value, the determination condition may be too strict, so the determination condition is loosened. As a result, productivity can be improved.

The configuration of the safety management assistance system 20 described above is the main configuration described in explaining the features of the embodiment described above, and is not limited to the configuration described above, and may be modified in various ways within the scope of the claims. Furthermore, a configuration of a general safety management assistance system 20 is not excluded.

### (Modification)

For example, in the first and second embodiments, the static hazardous area is included in the hazard list (steps S201 and S301), and it is determined whether or not the static hazardous area and the worker establish the predetermined positional relationship, from the predicted course of the worker 80. However, regarding the static hazardous area, alarming (notification processing in step S246) may be performed when the worker 80 actually enters, that is, when the position of the worker 80 detected is included in the static hazardous area.

The device and method for performing various types of processing in the safety management assistance system 20 according to the embodiment described above can be implemented by either a dedicated hardware circuit or a programmed computer. The above program may be provided by a computer-readable recording medium, for example, a USB memory, a Digital Versatile Disc ROM (DVD-ROM), or the like, or may be provided online via a network such as the Internet. In this case, the program recorded in the computer-readable recording medium is usually transferred to and stored in a storage unit such as a hard disk. Furthermore, the above program may be provided as standalone application software or may be incorporated into software of a device as one function of the device.

This application is based on a Japanese patent application filed on December 14, 2018 (Japanese Patent Application No. 2018-234794), the disclosure of which is referenced and incorporated as a whole.

### Reference Signs List

- 10: Measuring instrument
- 11: Lidar
- 20: Safety management assistance system
- 21: Storage unit
- 22: Control unit
- 221: Acquisition unit
- 222: Recognition unit
- 223: Predicted flow line generation unit
- 224: Determination unit
- 225: Notification unit
- 30: Work machine
- 301a to 301d, 302: Machine
- 40: Alarm device
- 40a, 40b: Warning light
- 60: RFID receiver
- 70: Management server
- 80: Worker
- 90: Work area

## Claims

1. A safety management assistance system comprising:
an acquisition unit that acquires position information of a worker working and/or a machine operating, in a work area;
a generation unit that generates a predicted flow line of the worker on a basis of a history of the position information of the worker, and generates a predicted flow line of the machine on a basis of a history of the position information of the machine and/or a set operating range;
a determination unit that predicts positions of the worker and the machine from positions of the worker and the machine at present, in the work area, acquired by the acquisition unit, and the predicted flow line of the worker and the predicted flow line of the machine, generated by the generation unit, and determines whether or not the predicted positions establish a predetermined positional relationship on a basis of a determination criterion; and
a notification unit that performs notification of information indicating that the predetermined positional relationship is established when the determination unit determines that the predetermined positional relationship is established.

2. The safety management assistance system according to claim 1, wherein the notification unit notifies the worker, the machine, or a pre-registered registrant of information indicating that the predetermined positional relationship is established.

3. The safety management assistance system according to claim 1 or 2, wherein
the acquisition unit acquires physical condition information regarding a physical condition of the worker, and
the determination unit changes the determination criterion on a basis of the physical condition information acquired by the acquisition unit.

4. The safety management assistance system according to any of claims 1 to 3, wherein
the acquisition unit acquires identification information of the worker, or an operator who operates the machine, and
the determination unit determines a proficiency level related to work in the work area of the worker or the operator on a basis of the identification information and a worker list describing correspondence between the identification information and the proficiency level, and changes the determination criterion depending on the determined proficiency level.

5. The safety management assistance system according to any of claims 1 to 4, wherein
the acquisition unit acquires identification information of the worker in each piece of the position information together with the position information of the worker,
the determination unit refers to a planned work area in the work area set in advance for each of the workers, and on a basis of the identification information, determines whether or not the worker is located outside the planned work area, or whether or not a worker other than a set worker is located in the planned work area, and
when the determination unit determines that the worker is located outside the planned work area, or determines that the worker other than the set worker is located in the planned work area, the notification unit performs notification of information to that effect.

6. The safety management assistance system according to any of claims 1 to 5, wherein the acquisition unit acquires information regarding an environmental state including at least one of temperature, humidity, or brightness in the work area, and changes the determination criterion depending on the environmental state.

7. The safety management assistance system according to any of claims 1 to 5, wherein
the acquisition unit acquires information regarding an environmental state including a position of a building or structure in the work area, and
the determination unit further refers to the environmental state, and determines whether or not the position of the building or structure and the predicted position of the worker, or the position of the building or structure and the predicted position of the machine establish the predetermined positional relationship on the basis of the determination criterion.

8. The safety management assistance system according to any of claims 1 to 7, wherein
the determination unit further determines whether or not the predicted position of the worker is included in a hazardous area in the work area set in advance, and
when the determination unit determines that the predicted position of the worker is included in the hazardous area, the notification unit performs notification of information to that effect.

9. The safety management assistance system according to any of claims 1 to 8, wherein the position information acquired by the acquisition unit includes three-dimensional position information.

10. The safety management assistance system according to claim 9, wherein the position information acquired by the acquisition unit includes three-dimensional position information obtained by measuring a distance with Lidar.

11. The safety management assistance system according to any of claims 1 to 10, wherein
information indicating that the predetermined positional relationship is established includes avoidance information indicating a guidance position or guidance direction for guiding the worker not to establish the predetermined positional relationship, and
the notification unit notifies the worker of the avoidance information.

12. The safety management assistance system according to claim 11, wherein after the notification unit notifies the worker of the avoidance information, the determination unit performs evaluation of an avoidance result regarding the worker, and changes the avoidance information or the determination criterion to be used thereafter depending on the evaluation.

13. A control program executed by a computer that controls a safety management assistance system that acquires position information of a worker working and/or a machine operating in a work area,
the control program for causing the computer to execute processing including:
a step (a) of generating a predicted flow line of the worker on a basis of a history of the position information of the worker;
a step (b) of generating a predicted flow line of the machine on a basis of a history of the position information of the machine and/or a set operating range;
a step (c) of acquiring positions of the worker and the machine at present in the work area;
a step (d) of predicting positions of the worker and the machine from the positions of the worker and the machine at present acquired in the step (c), the predicted flow line of the worker generated in the step (a), and the predicted flow line of the machine generated in the step (b), and determining whether or not the predicted positions establish a predetermined positional relationship on a basis of a determination criterion; and
a step (e) of performing notification of information indicating that the predetermined positional relationship is established when it is determined in the step (d) that the predetermined positional relationship is established.
